# EUROPÄISCHE PATENTSCHRIFT

(11) **EP 3 666 567 B1**
(45) Veröffentlichungstag und Bekanntmachung des Hinweises auf die Patenterteilung: **14.06.2023**
(21) Anmeldenummer: 19214795.7
(22) Anmeldetag: 10.12.2019
(51) Int. Cl.: B60J 5/06, B60J 7/10

(54) **BEGRENZUNGSPLANE FÜR EINEN NUTZFAHRZEUGAUFBAU, NUTZFAHRZEUGAUFBAU UND NUTZFAHRZEUG MIT EINEM NUTZFAHRZEUGAUFBAU**
SIDE CURTAIN FOR A TRUCK-TRAILER, TRUCK-TRAILER AND TRUCK WITH A TRUCK-TRAILER
RIDEAU LATÉRAL POUR CAMION-REMORQUE, CAMION-REMORQUE ET CAMION AVEC CAMION-REMORQUE

(30) Priorität: 14.12.2018 DE 202018107161 U
(43) Veröffentlichungstag der Anmeldung: 17.06.2020
(73) Patentinhaber: Kögel Trailer GmbH, 89349 Burtenbach (DE)
(72) Erfinder: Kalischko, Thomas, 86470 Thannhausen (DE)
(74) Vertreter: Meissner Bolte Partnerschaft mbB

(56) Entgegenhaltungen:
- DE-U- 1 970 950
- DE-U1-202006 003 548
- DE-U1-202017 102 738
- FR-A1- 2 599 326

## Beschreibung

Die Erfindung betrifft eine Begrenzungsplane für einen Nutzfahrzeugaufbau, insbesondere einen Planensattelauflieger, die zur Ladungssicherung dient. Ferner betrifft die Erfindung einen Nutzfahrzeugaufbau sowie ein Nutzfahrzeug mit einer solchen Begrenzungsplane. Eine Begrenzungsplane gemäß dem Oberbegriff des Patentanspruchs 1 ist beispielsweise aus DE 20 2006 003 548 U1 bekannt.

Aus der Praxis sind Begrenzungsplanen, insbesondere als Seitenplanen oder Dachplanen für Nutzfahrzeugaufbauten hinlänglich bekannt. Begrenzungsplanen dienen zur ordnungsgemäßen Ladungssicherung. Eine korrekte Ladungssicherung sorgt dafür, dass das Transportgut unbeschädigt beim Warenempfänger ankommt und dass während des Transports niemand aufgrund einer herabfallenden Ladung zu Schaden kommt. Des Weiteren dienen Begrenzungsplanen dazu, die Ladung vor Witterungseinflüssen und Diebstahl zu schützen. Während des Transports nehmen die Begrenzungsplanen Ladungskräfte auf, die infolge des Beschleunigungs- und Bremsvorgangs auftreten. Diese Kräfte werden von innen gegen die Seitenwand aufgebracht. Dabei darf die Auslenkung der Begrenzungsplanen einen gesetzlich vorgegebenen Wert für die Stabilität des Nutzfahrzeugaufbaus nicht überschreiten. Die gesetzlichen Vorgaben sind verschärft worden, so dass die technischen Anforderungen an die Ladungssicherung gestiegen sind.

Aus DE 20 2017 102 738 U1 sind Begrenzungsplanen bekannt, die Planenlaufrollen im Bereich einer Oberkante umfassen, die dazu dienen, die Begrenzungsplanen mit einem Dachholm eines Nutzfahrzeugaufbaus zu verbinden, um die Verschiebung der Begrenzungsplanen entlang des Dachholms zu ermöglichen. Im Bereich einer Unterkante sind die Begrenzungsplanen mit Planenspanner versehen, die die Begrenzungsplanen in vertikaler Richtung fixieren und spannen, so dass die Begrenzungsplanen für den Fahrbetrieb gesichert sind.

Um den Anforderungen an die Stabilität des Nutzfahrzeugaufbaus gerecht zu werden, werden in der Praxis einlagige Aussteifungsgurte auf die Begrenzungsplanen aufgeschweißt. Die maximale elastische Dehnfähigkeit der aus DE 20 2017 102 738 U1 bekannten Aussteifungsgurte in Gurtlängsrichtung ist derart begrenzt, dass sich die Gurte bei maximaler elastischer Dehnung um höchstens 10%, insbesondere höchstens 8%, gegenüber ihrer Ausgangslage verlängern. Gleichzeitig sind die Aussteifungsgurte so angepasst, dass sie sich bei maximaler Dehnung in Gurtlängsrichtung um mindestens 3%, insbesondere mindestens 5%, bezogen auf ihre ursprüngliche Ausgangslänge verlängern. Damit wird sichergestellt, dass die auf die Begrenzungsplanen aufgebrachte Ladungskraft zumindest teilweise durch die Aussteifungsgurte selbst aufgenommen wird. Ferner wird damit sichergestellt, dass der Teil der Ladungskraft, der an den Planenlaufrollen und Planenspanner übertragen wird, auf diese Weise reduziert wird.

Nachteilig an den allgemein bekannten Begrenzungsplanen ist, dass die eingesetzten Aussteifungsgurte, die die gesetzlichen Anforderungen erfüllen und eine geringe Dehnung aufweisen, kostenintensiv sind. Standardgurte, wie sie beispielsweise bei einem Nutzfahrzeugaufbau gemäß der eingangs genannten DE 20 2006 003 548 U1 eingesetzt werden, sind zwar günstiger, weisen jedoch eine stärkere Dehnung auf, so dass sich die Begrenzungsplanen unter Einwirkung der Ladungskräfte weiterhin auswölben können. Die geforderte Aufbaustabilität wird nur mit zusätzlichem Aufwand, insbesondere durch Erhöhung der Anzahl von Aussteifungsgurten entlang der Planenlängsrichtung erreicht.

Der Erfindung liegt die Aufgabe zu Grunde, eine Begrenzungsplane mit einfach und kostengünstig aufgebauten Aussteifungselementen anzugeben, die eine geringere Dehnung im Vergleich zu Standardgurten aufweisen, so dass auf die Verwendung kostenintensiver Sondergurte verzichtet werden kann. Ferner ist es Aufgabe der Erfindung, einen Nutzfahrzeugaufbau sowie ein Nutzfahrzeug mit einem solchen Nutzfahrzeugaufbau anzugeben.

Erfindungsgemäß wird diese Aufgabe im Hinblick auf die Begrenzungsplane durch den Gegenstand des Anspruchs 1, im Hinblick auf den Nutzfahrzeugaufbau durch den Gegenstand des Anspruchs 14 und im Hinblick auf das Nutzfahrzeug durch den Gegenstand des Anspruchs 15 gelöst.

Konkret wird die Aufgabe durch eine Begrenzungsplane für einen Nutzfahrzeugaufbau, insbesondere einen Planensattelauflieger, gelöst. Die Begrenzungsplane weist mehrere Aussteifungselemente auf, die jeweils einen ersten Gurt aufweisen. Ferner weisen die Aussteifungselemente zur Verringerung der Dehnung der Begrenzungsplane jeweils wenigstens einen zweiten Gurt auf, der auf dem ersten Gurt angeordnet ist. Erfindungsgemäß sind die beiden Gurte über ihre gesamte Länge aufeinander angeordnet.

Die Erfindung hat den Vorteil, dass die gesetzlichen Vorgaben für die Stabilität des Nutzfahrzeugaufbaus ohne größeren Kostenaufwand eingehalten werden können. Die Verringerung der Dehnung bzw. Erhöhung der Steifigkeit der Begrenzungsplane erfolgt dabei durch das Anordnen eines zweiten Gurtes auf einem bestehenden ersten Gurt. Bei den eingesetzten Gurten handelt es sich um sogenannte Aussteifungsgurte. Dies bringt den Vorteil mit sich, dass zumindest im Betriebszustand höhere Ladungskräfte aufgenommen werden können, wobei die Auslenkung der Begrenzungsplane reduziert bzw. begrenzt wird. Das Aufeinanderanordnen der Gurte hat im Vergleich zur Anordnung der Gurte nebeneinander den weiteren Vorteil, dass weniger Platz in Planenlängsrichtung eingenommen wird. Das führt wiederum dazu, dass weniger Planenlaufrollen bzw. Planenspanner eingesetzt werden müssen.

Bevorzugte Ausführungsformen der Erfindung sind in den Unteransprüchen angegeben.

Bei einer erfindungsgemäßen Ausführungsform der Begrenzungsplane sind die Aussteifungselemente jeweils im Wesentlichen senkrecht zur Planenlängsrichtung angeordnet. Dies bringt den Vorteil mit sich, dass die Aussteifungselemente an den beiden Enden mit Planenlaufrollen und Planenspanner verbunden werden können, um eine effiziente Kraftüberleitung von der Begrenzungsplane in die tragenden Strukturen des Nutzfahrzeugaufbaus zu ermöglichen.

In einer weiteren bevorzugten Ausführungsform sind die Aussteifungselemente waagrecht zur Planenlängsrichtung angeordnet. Das hat den Vorteil, dass die Dehnung in waagrechter Richtung reduziert bzw. begrenzt werden kann.

Bei einer erfindungsgemäßen Ausführungsform der Begrenzungsplane können die Aussteifungselemente diagonal zur Planenlängsrichtung angeordnet sein. Diese Anordnung ist für die Stabilisierung der Dachplane oder Seitenplane vorteilhaft. Bei einer erfindungsgemäßen Ausführungsform der Begrenzungsplane kann die Begrenzungsplane im Bereich einer Oberkante mit Planenlaufrollen und im Bereich einer Unterkante mit Planenspannern versehen sein. Damit lässt sich die Begrenzungsplane einfach und funktionell mit einem Nutzfahrzeugaufbau kombinieren.

In einer weiteren bevorzugten Ausführungsform sind die Aussteifungselemente mit den Planenlaufrollen und den Planenspanner verbunden, insbesondere fest verbunden. Insbesondere kann jeweils ein Aussteifungselement einen Planenlaufroller und einen Planenspanner miteinander verbinden. Damit wird eine effiziente Kraftüberleitung von der Begrenzungsplane in die tragenden Strukturen des Nutzfahrzeugaufbaus ermöglicht. Die Verbindung zwischen den Aussteifungselementen und den jeweiligen Planenlaufrollen bzw. Planenspannern kann durch Vernähen, Vernieten und/oder Verschrauben erfolgen, wobei ein Vernähen bevorzugt wird.

Bei einer Ausführungsform der Erfindung ist vorgesehen, dass der erste Gurt und der zweite Gurt lose in einer Planentasche geführt sind. Dies hat den Vorteil, dass nicht schweißbare Gurte eingesetzt werden können. Die Führung der beiden Gurte in einer Planentasche hat den weiteren Vorteil, dass die Planentasche zusätzlich zur Aufnahme von Planken bzw. Abstandshaltern genutzt werden kann. Es können sowohl ein Teil, als auch alle Aussteifungselemente jeweils in Planentaschen angeordnet sein. Jeweils ein Aussteifungselement umfasst den ersten Gurt und den zweiten Gurt.

Die Planentaschen sind bevorzugt entlang der gesamten Länge mit der Begrenzungsplane verbunden, insbesondere schweißverbunden. Die Planentaschen können auf eine Innenfläche der Begrenzungsplane aufgesetzt und mittels Schweißen an der Begrenzungsplane befestigt sein. Das verhindert, dass die Gurte seitlich von der Begrenzungsplane abstehen und den Ladevorgang behindern.

In einer weiteren bevorzugten Ausführungsform der Erfindung sind die beiden Enden des ersten Gurtes und des zweiten Gurtes mit dem Planenlaufroller sowie dem Planenspanner verbunden, insbesondere fest verbunden. Die Enden können durch Vernähen, Vernieten und/oder Verschrauben erfolgen, wobei ein Vernähen bevorzugt wird. Dies bringt den Vorteil mit sich, dass auch nicht schweißbare Gurte eingesetzt werden können, aber dennoch eine ausreichende Kraftüberleitung von der Begrenzungsplane in die tragenden Strukturen des Nutzfahrzeugaufbaus ermöglicht werden kann.

Alternativ kann vorgesehen werden, dass das Aussteifungselement mit der Begrenzungsplane schweißverbunden ist. Der erste Gurt kann in die Begrenzungsplane eingearbeitet, insbesondere eingeschweißt sein oder auf eine Innenfläche der Begrenzungsplane aufgesetzt und mittels Schweißen an der Begrenzungsplane befestigt sein. Die stoffschlüssige Verbindung hat den Vorteil, dass die Begrenzungsplane fester fixiert bzw. gespannt wird, so dass die Begrenzungsplane höhere Ladungskräfte aufnehmen kann.

Bei einer Ausführungsform der Erfindung ist der erste Gurt auf der Begrenzungsplane und der zweite Gurt auf dem bestehenden ersten Gurt aufgeschweißt, wobei beide Gurte entlang der gesamten Länge miteinander verschweißt sind. Durch das Aufschweißen des zweiten Gurtes wird die Steifigkeit der Begrenzungsplane erhöht, so dass auf kostenintensive Sondergurte verzichtet werden kann.

In einer bevorzugten Ausführungsform kann der erste Gurt auf der Begrenzungsplane aufgeschweißt und der zweite Gurt lose auf dem ersten Gurt angeordnet sein. Das hat den Vorteil, dass beispielsweise schweißbare und nicht schweißbare Gurte miteinander kombiniert werden können.

In einer weiteren bevorzugten Ausführungsform können alle oder nur ein Teil der Aussteifungselemente einen zweiten Gurt aufweisen. Dies bringt den Vorteil mit sich, dass je nach Anwendungsfall die Dehnung in einem bestimmten Bereich der Begrenzungsplane reduziert werden kann.

Der erste Gurt ist vorzugsweise entlang der gesamten Länge mit der Begrenzungsplane schweißverbunden. Somit wird eine Mindestkraftübertragung des ersten Gurtes bzw. eine Mindeststeifigkeit der Begrenzungsplane gewährleistet.

Die Erfindung erstreckt sich außerdem auf einen Nutzfahrzeugaufbau, insbesondere Sattelaufliegeraufbau, mit einer zuvor beschriebenen Begrenzungsplane. Bei dem erfindungsgemäßen Nutzfahrzeugaufbau können vorteilhafterweise ein Dach, ein Ladeboden und seitliche Rungen vorgesehen sein, wobei sich die Rungen im Wesentlichen senkrecht zwischen dem Dach und dem Ladeboden erstrecken und Aufnahmetaschen für Spriegelbretter aufweisen. Die Spriegelbretter bzw. Latten können so zwischen jeweils zwei in Längsrichtung hintereinander angeordnete

Rungen eingelegt werden und eine formschlüssige Ladungssicherung gewährleisten. Da die Aussteifung der Begrenzungsplanen durch Aussteifungsgurte bewerkstelligt wird, weist die Begrenzungsplane eine relativ geringe Wandstärke auf, so dass es ohne Weiteres möglich ist, zusätzlich Spriegelbretter zur formschlüssigen Ladungssicherung einzusetzen, ohne das Laderaumvolumen stark zu beeinträchtigen bzw. die gesetzlich vorgegebenen Außenmaße des Nutzfahrzeugaufbaus zu überschreiten.

Im Rahmen der vorliegenden Anmeldung wird außerdem ein Nutzfahrzeug, insbesondere ein Sattelauflieger, mit einer zuvor beschriebenen Begrenzungsplane oder einem zuvor beschriebenen Nutzfahrzeugaufbau offenbart und beansprucht.

Die Erfindung wird im Folgenden anhand eines Ausführungsbeispiels unter Bezugnahme auf die beigefügten schematischen Zeichnungen näher erläutert. Darin zeigen
- Figur 1: eine perspektivische Ansicht einer erfindungsgemäßen Begrenzungsplane nach einem bevorzugten Ausführungsbeispiel; und
- Figur 2: eine Drauf- bzw. Seitenansicht der Begrenzungsplane gemäß Figur 1.

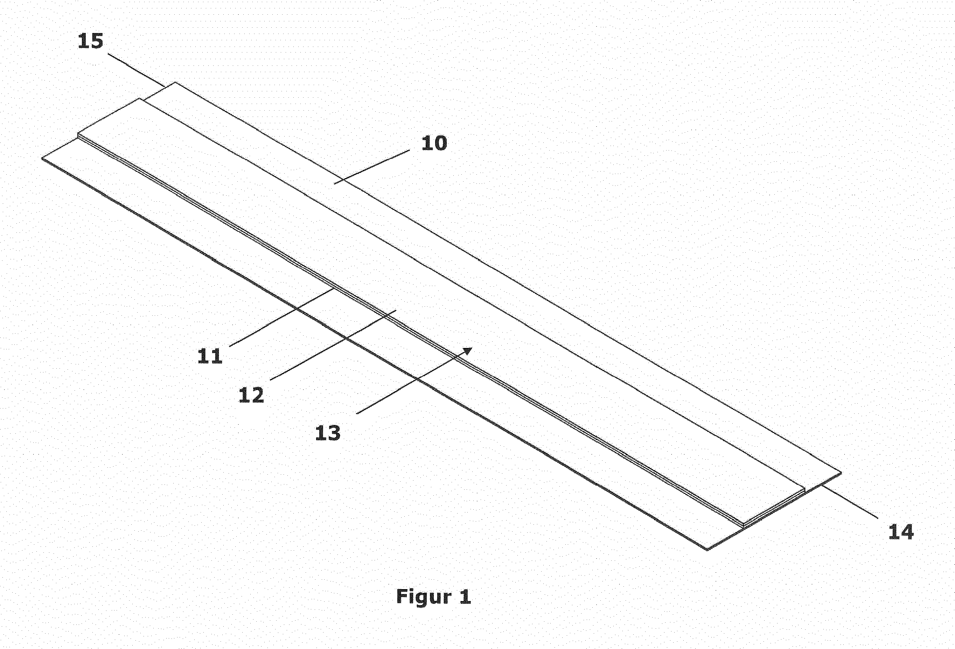

Figur 1 stellt eine perspektivische Ansicht der Begrenzungsplane 10 mit einem Aussteifungselement 13 dar.

Die Begrenzungsplane 10 umfasst im Bereich der Oberkante 15 Planlaufrollen und im Bereich der Unterkante 14 Planenspanner, so dass sich die Begrenzungsplane 10 einfach und funktionell mit einem Nutzfahrzeugaufbau kombinieren lässt. Die Planenlaufrollen und Planenspanner sind nicht in den Figuren dargestellt. Die Planenlaufrollen und Planenspanner sind fest mit der Begrenzungsplane 10 verbunden, insbesondere verschraubt bzw. vernietet. Die Planenlaufrollen sind so angepasst, dass sie in einer Führungsschiene eines Dachlängsträgers eines Nutzfahrzeugaufbaus geführt werden können. Auf diese Weise ist die Begrenzungsplane 10 entlang des Dachlängsträgers verschiebbar. Die Planenspanner fixieren und spannen die Begrenzungsplanen 10 in vertikaler Richtung, so dass die Begrenzungsplanen 10 für den Fahrbetrieb gesichert sind.

Zwischen den Planenlaufrollen und Planenspannern erstreckt sich das Aussteifungselement 13. Es ist jeweils ein Aussteifungselement 13 fest mit einer Planenlaufrolle und einem Planenspanner verbunden. Die Verbindung zwischen dem Aussteifungselement 13 und den Planenlaufrollen bzw. dem Planenspanner kann durch Vernähen, Vernieten und/oder Verschrauben erfolgen, wobei ein Vernähen bevorzugt wird.

Das Aussteifungselement 13 umfasst den ersten Gurt 11 und den zweiten Gurt 12. Es ist möglich, dass alle oder nur ein Teil der Aussteifungselemente 13 zwei oder mehr Gurte umfassen. Der erste Gurt 11 ist entlang der gesamten Länge mit der Begrenzungsplane 10 verbunden, insbesondere verschweißt. Der erste Gurt 11 kann mit der Begrenzungsplane 10 vernäht sein. Der erste Gurt 11 kann mit einer Innenfläche der Begrenzungsplane 10 verbunden sein. Ferner kann der erste Gurt 11 lose in einer Planentasche geführt sein. Der zweite Gurt 12 ist auf dem ersten Gurt 11 angeordnet, insbesondere aufgeschweißt. Der zweite Gurt 12 kann lose auf dem ersten Gurt 11 angeordnet und zusammen mit dem ersten Gurt 11 in einer Planentasche geführt sein. In beiden Fällen sind die beiden Gurte 11 und 12 entlang der gesamten Länge aufeinander angeordnet.

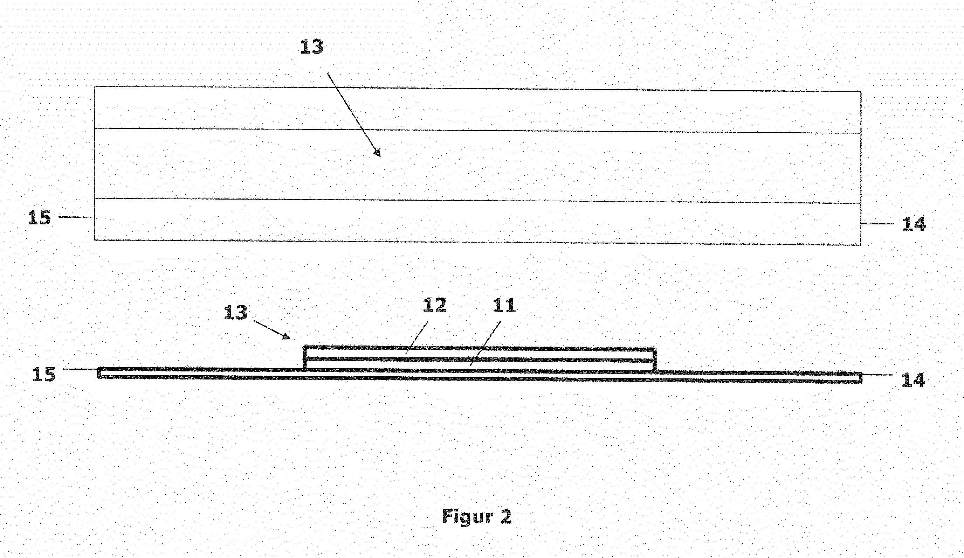

Figur 2 zeigt eine Drauf- bzw. Seitenansicht der Begrenzungsplane 10 gemäß Figur 1. Es ist sehr gut erkennbar, dass die beiden Gurte 11 und 12 entlang der gesamten Länge aufeinander angeordnet sind. Durch das Verschweißen des ersten Gurtes 11 mit der Begrenzungsplane 10 wird eine Mindeststeifigkeit des Aussteifungselements 13 erreicht. Das Aufbringen des zweiten Gurtes 12 führt dazu, dass die Steifigkeit des Aussteifungselements 13 weiter erhöht bzw. die Auslenkung der Begrenzungsplane 10 reduziert wird, so dass auf kostenintensive Sondergurte verzichtet werden kann.

Für die Kombination aus schweißbaren und nicht schweißbaren Gurten sind nicht dargestellte Planentaschen vorgesehen, die aus demselben Material wie die Begrenzungsplane 10 oder aus einem kombinationsfähigem Material gefertigt sind und somit eine einheitliche Optik ermöglichen. Die Planentaschen sind entlang der gesamten Länge mit der Begrenzungsplane 10 verbunden, insbesondere schweißverbunden. Alternativ sind die Planentaschen auf eine Innenfläche der Begrenzungsplane 10 verbunden. Die Planentaschen stellen eine Art Tunnel dar, in der jeweils die beiden Gurte 11 und 12 zusammengefasst bzw. lose geführt sind. Es ist möglich, dass nur ein Teil der Aussteifungselemente 13 in Planentaschen geführt und ein anderer Teil der Aussteifungselemente 13 fest mit der Begrenzungsplane 10 verbunden ist. In diesem Fall sind die beiden Gurte 11 und 12 jeweils an den Enden mit den Planlaufrollen bzw. Planenspanner verbunden. Die Verbindung kann durch Vernähen, Vernieten und/oder Verschrauben erfolgen, wobei ein Vernähen bevorzugt wird. Die Planenlaufrollen bzw. Planenspanner stellen Krafteinleitungspunkte dar, an denen die auf das Aussteifungselement 13 wirkenden Ladungskräfte in die tragenden Strukturen des Nutzfahrzeugaufbaus zur Fixierung bzw. Spannung Begrenzungsplane 10 weitergeleitet werden.

Die Führung bzw. Zusammenfassung der beiden Gurte 11 und 12 hat den weiteren Vorteil, dass die Gurte nicht seitlich von der Begrenzungsplane 10 abstehen und den Ladevorgang behindern.

### Bezuaszeichenliste

- 10: Begrenzungsplane
- 11: erster Gurt
- 12: zweiter Gurt
- 13: Aussteifungselement
- 14: Unterkante
- 15: Oberkante

## Patentansprüche

1. Begrenzungsplane für einen Nutzfahrzeugaufbau, insbesondere einen Planensattelauflieger, mit mehreren Aussteifungselementen (13), die jeweils einen ersten Gurt (11) und zur Verringerung der Dehnung der Begrenzungsplane (10) jeweils wenigstens einen zweiten Gurt (12) aufweisen, wobei der zweite Gurt (12) auf dem ersten Gurt (11) angeordnet ist,
**dadurch gekennzeichnet, dass**
die beiden Gurte (11, 12) entlang ihrer gesamten Länge aufeinander angeordnet sind, wobei der zweite Gurt (12) auf dem ersten Gurt (11) aufgeschweißt ist oder wobei der zweite Gurt (12) lose auf dem ersten Gurt (11) angeordnet und in einer Planentasche geführt ist.

2. Begrenzungsplane nach Anspruch 1,
**dadurch gekennzeichnet, dass**
die Aussteifungselemente (13) jeweils im Wesentlichen senkrecht zur Planenlängsrichtung angeordnet sind.

3. Begrenzungsplane nach Anspruch 1 oder 2,
**dadurch gekennzeichnet, dass**
wenigstens ein Aussteifungselement (13) waagrecht zur Planenlängsrichtung angeordnet ist.

4. Begrenzungsplane nach einem der Ansprüche 1-3,
**dadurch gekennzeichnet, dass**
wenigstens ein Aussteifungselement (13) diagonal zur Planenlängsrichtung angeordnet ist.

5. Begrenzungsplane nach einem der vorherigen Ansprüche,
**dadurch gekennzeichnet, dass**
die Begrenzungsplane (10) im Bereich einer Oberkante (15) mit Planenlaufrollen und im Bereich einer Unterkante (14) mit Planenspannern versehen ist.

6. Begrenzungsplane nach Anspruch 5,
**dadurch gekennzeichnet, dass**
jeweils ein Aussteifungselement (13) einen Planenlaufroller und einen Planenspanner verbindet.

7. Begrenzungsplane nach einem der vorhergehenden Ansprüche,
**dadurch gekennzeichnet, dass**
die Planentasche entlang der gesamten Länge mit der Begrenzungsplane (10) verbunden ist.

8. Begrenzungsplane nach einem der vorhergehenden Ansprüche,
**dadurch gekennzeichnet, dass**
die beiden Enden des ersten Gurtes (11) und des zweiten Gurtes (12) mit dem Planenlaufroller und dem Planenspanner verbunden sind.

9. Begrenzungsplane nach einem der Ansprüche 1-5,
**dadurch gekennzeichnet, dass**
das Aussteifungselement (13) mit der Begrenzungsplane (10) schweißverbunden ist.

10. Begrenzungsplane nach Anspruch 9,
**dadurch gekennzeichnet, dass**
der erste Gurt (11) auf der Begrenzungsplane (10) aufgeschweißt ist.

11. Begrenzungsplane nach Anspruch 9,
**dadurch gekennzeichnet, dass**
der erste Gurt (11) auf der Begrenzungsplane (10) aufgeschweißt und der zweite Gurt (12) lose auf dem ersten Gurt (11) angeordnet ist.

12. Begrenzungsplane nach einem der vorherigen Ansprüche,
**dadurch gekennzeichnet, dass**
alle oder nur ein Teil der Aussteifungselemente (13) einen zweiten Gurt (12) aufweisen.

13. Begrenzungsplane nach einem der Ansprüche 9-12,
**dadurch gekennzeichnet, dass**
der erste Gurt (11) entlang der gesamten Länge mit der Begrenzungsplane (10) schweißverbunden ist.

14. Nutzfahrzeugaufbau, insbesondere Sattelaufliegeraufbau, mit einer Begrenzungsplane (10) nach einem der vorhergehenden Ansprüche.

15. Nutzfahrzeug, insbesondere Sattelauflieger, mit einer Begrenzungsplane (10) oder einem Nutzfahrzeugaufbau nach einem der vorhergehenden Ansprüche.

## Claims

1. A boundary tarpaulin for autility vehicle body, in particular a tarpaulin semi-trailer, having multiple reinforcement elements (13), which each have a first strap (11) and, to reduce the strain on the boundary tarpaulin (10), at least one second strap (12), the second strap (12) being arranged on the first strap (11),
**characterised in that**
the two straps (11, 12) are arranged one on top of the other along their entire length, wherein the second strap (12) is welded on the first strap (11), or wherein the second strap (12) is arranged loosely on the first strap (11) and is guided in a tarpaulin pocket.

2. The boundary tarpaulin according to Claim 1,
**characterised in that**
the reinforcement elements (13) are each arranged substantially perpendicular to the tarpaulin longitudinal direction.

3. The boundary tarpaulin according to Claim 1 or 2,
**characterised in that**
at least one reinforcement element (13) is arranged horizontally to the tarpaulin longitudinal direction.

4. The boundary tarpaulin according to any one of Claims 1 to 3,
**characterised in that**
at least one reinforcement element (13) is arranged diagonally to the tarpaulin longitudinal direction.

5. The boundary tarpaulin according to any one of the preceding claims,
**characterised in that**
the boundary tarpaulin (10) is provided with tarpaulin rollers in the region of an upper edge (15) and with tarpaulin tensioners in the region of a lower edge (14) .

6. The boundary tarpaulin according to Claim 5,
**characterised in that**
in each case one reinforcement element (13) connects one tarpaulin roller and one tarpaulin tensioner.

7. The boundary tarpaulin according to any one of the preceding claims,
**characterised in that**
the tarpaulin pocket is connected to the boundary tarpaulin (10) along the entire length.

8. The boundary tarpaulin according to any one of the preceding claims,
**characterised in that**
the two ends of the first strap (11) and of the second strap (12) are connected to the tarpaulin roller and the tarpaulin tensioner.

9. The boundary tarpaulin according to any one of Claims 1 to 5,
**characterised in that**
the reinforcement element (13) is welded to the boundary tarpaulin (10).

10. The boundary tarpaulin according to Claim 9,
**characterised in that**
the first strap (11) is welded on the boundary tarpaulin (10).

11. The boundary tarpaulin according to Claim 9,
**characterised in that**
the first strap (11) is welded on the boundary tarpaulin (10), and the second strap (12) is arranged loosely on the first strap (11).

12. The boundary tarpaulin according to any one of the preceding claims,
**characterised in that**
all or only some of the reinforcement elements (13) have a second strap (12).

13. The boundary tarpaulin according to any one of Claims 9 to 12,
**characterised in that**
the first strap (11) is welded to the boundary tarpaulin (10) along the entire length.

14. Autility vehicle body, in particular a semi-trailer body, having a boundary tarpaulin (10) according to any one of the preceding claims.

15. Autility vehicle, in particular a semi-trailer, having a boundary tarpaulin (10) or a utility vehicle body according to any one of the preceding claims.

## Revendications

1. Bâche de délimitation pour une carrosserie de véhicule utilitaire, notamment pour une semi-remorque bâchée, pourvue de plusieurs éléments raidisseurs (13), qui comportent chacun une première sangle (11) et pour réduire la dilatation de la bâche de délimitation (10), chacun au moins une deuxième sangle (12), la deuxième sangle (12) étant placée sur la première sangle (11),
**caractérisée en ce que**
les deux sangles (11, 12) sont placées l'une sur l'autre sur toute leur longueur, la deuxième sangle (12) étant soudée sur la première sangle (11) ou la deuxième sangle (12) étant placée de manière lâche sur la première sangle (11) et étant guidée dans un sac de bâche.

2. Bâche de délimitation selon la revendication 1,
**caractérisée en ce que**
les éléments raidisseurs (13) sont placés chacun sensiblement à la perpendiculaire de la direction longitudinale de la bâche.

3. Bâche de délimitation selon la revendication 1 ou 2,
**caractérisée en ce**
**qu'**au moins un élément raidisseur (13) est placé à l'horizontale par rapport à la direction longitudinale de la bâche.

4. Bâche de délimitation selon l'une quelconque des revendications 1 à 3,
**caractérisée en ce**
**qu'**au moins un élément raidisseur (13) est placé à la diagonale par rapport à la direction longitudinale de la bâche.

5. Bâche de délimitation selon l'une quelconque des revendications précédentes,
**caractérisée en ce que**
dans la zone d'une arête supérieure (15), la bâche de délimitation (10) est munie de galets de roulement de bâche et dans la zone d'une arête inférieure (14), est munie de tendeurs de bâche.

6. Bâche de délimitation selon la revendication 5,
**caractérisée en ce que**
chaque fois un élément raidisseur (13) relie un galet de roulement de bâche et un tendeur de bâche.

7. Bâche de délimitation selon l'une quelconque des revendications précédentes,
**caractérisée en ce que**
le sac de bâche est assemblé le long de toute la longueur avec la bâche de délimitation (10).

8. Bâche de délimitation selon l'une quelconque des revendications précédentes,
**caractérisée en ce que**
les deux extrémités de la première sangle (11) et de la deuxième sangle (12) sont assemblées avec le galet de roulement de bâche et le tendeur de bâche.

9. Bâche de délimitation selon l'une quelconque des revendications 1 à 5,
**caractérisée en ce que**
l'élément raidisseur (13) est assemblé par soudure avec la bâche de délimitation (10).

10. Bâche de délimitation selon la revendication 9,
**caractérisée en ce que**
la première sangle (11) est soudée sur la bâche de délimitation (10).

11. Bâche de délimitation selon la revendication 9,
**caractérisée en ce que**
la première sangle (11) est soudée sur la bâche de délimitation (10) et la deuxième sangle (12) est placée de manière lâche sur la première sangle (11).

12. Bâche de délimitation selon l'une quelconque des revendications précédentes,
**caractérisée en ce que**
tous ou seulement une partie des éléments raidisseurs (13) comportent une deuxième sangle (12).

13. Bâche de délimitation selon l'une quelconque des revendications 9 à 12,
**caractérisée en ce que**
la première sangle (11) est assemblée par soudure sur toute la longueur avec la bâche de délimitation (10).

14. Carrosserie de véhicule utilitaire, notamment carrosserie de semi-remorque, pourvue d'une bâche de délimitation (10) selon l'une quelconque des revendications précédentes.

15. Véhicule utilitaire, notamment semi-remorque, pourvu d'une bâche de délimitation (10) ou d'une carrosserie de véhicule utilitaire selon l'une quelconque des revendications précédentes.
